# DEMANDE DE BREVET EUROPEEN

(11) **EP 1 233 633 A1**
(43) Date de publication de la demande: **21.08.2002**
(21) Numéro de dépôt: 02290171.4
(22) Date de dépôt: 24.01.2002
(51) Int. Cl.: H04Q 7/22

(54) **Procédé et structure de données pour la gestion d'une animation d'icones definies dans un message et terminal mobile permettant d'executer ce procédé**

(30) Priorité: 15.02.2001 FR 0102072
(71) Demandeur: ALCATEL, 75008 Paris (FR)
(72) Inventeur: Castres, Christophe, 95240 Cormeilles en Parisis (FR); Ambone, Gilles, 92400 Courbevoie (FR)
(74) Mandataire: El Manouni, Josiane

(57) **Abrégé**

Le message est destiné à être transmis par un réseau télécommunication entre un terminal émetteur et un terminal récepteur. Selon le procédé, on construit une structure (D) de données dans laquelle on associe aux icônes une séquence (S) de mots destinés à gérer l'animation de ces icônes comprenant un premier type de mot (Fzyx, Fz'y'x') définissant une durée d'affichage d'icône et un second type de mot (R1, R2, R'1, R3) définissant un renvoi vers une icône sélectionnée définie dans la structure (D) de données, puis, on exécute la séquence (S) de façon que la durée d'affichage d'une icône sélectionnée est imposée par le dernier mot du premier type qui précède le mot du second type renvoyant vers l'icône sélectionnée.

## Description

La présente invention concerne un procédé et une structure de données pour la gestion d'une animation d'icônes définies dans un message ainsi qu'un terminal mobile permettant d'exécuter ce procédé.

La plupart des fournisseurs d'accès aux réseaux de télécommunication sans fil, notamment au réseau cellulaire de télécommunication conforme à la norme GSM (Global System for Mobile Communications), offrent un service de messagerie permettant d'envoyer ou de recevoir des messages, en général de texte, à partir de terminaux mobiles. Un service de messagerie de ce type est connu en particulier sous le nom de SMS (Short Message Service). On a proposé récemment une évolution des spécificités du SMS appelée EMS (Enhanced Messaging Service) en vue de standardiser la transmission, dans un réseau de télécommunication sans fil, des messages dans lesquels sont définies notamment des icônes.

L'invention a pour but de gérer une animation d'icônes définies dans un message destiné à être transmis entre un émetteur est un récepteur d'un réseau de télécommunication, plus particulièrement un réseau sans fil, ceci au moyen d'un procédé compatible le cas échéant avec les spécificités d'un service EMS.

A cet effet, l'invention a pour objet un procédé de gestion d'une animation d'icônes définies dans un message destiné à être transmis par un réseau de télécommunication entre un terminal émetteur et un terminal récepteur,
**caractérisé en ce que**
- on construit une structure de données dans laquelle on associe aux icônes une séquence de mots destinés à gérer l'animation de ces icônes comprenant un premier type de mot définissant une durée d'affichage d'icône et un second type de mot définissant un renvoi vers une icône sélectionnée définie dans la structure de données,
- on exécute la séquence de façon que la durée d'affichage d'une icône sélectionnée est imposée par le dernier mot du premier type qui précède le mot du second type renvoyant vers l'icône sélectionnée.

Suivant des caractéristiques de différents modes de réalisation de ce procédé :
- la séquence est définie dans un support de données du terminal récepteur et l'on construit la structure de données dans le terminal récepteur ;
- le message dans lequel sont définies les icônes est de type EMS (Enhanced Messaging Service) ;
- l'on construit la structure de données dans le message destiné être transmis entre le terminal émetteur et le terminal récepteur ;
- le message destiné à être transmis entre le terminal émetteur et le terminal récepteur est de type SMS (Short Message Service) ;
- les icônes de l'animation sont définies les unes à la suite des autres dans la structure de données ;
- l'icône définie en premier dans la structure de données est directement précédée de la séquence de gestion de l'animation ;
- dans la structure de données, la séquence est directement précédée d'un mot définissant la taille de la séquence de gestion de l'animation ;
- le premier mot de la séquence de gestion de l'animation est du premier type;
- les mots et les icônes sont définis par des octets, les mots du second type définissant un saut d'octets ;
- les mots du premier type définissant une durée d'affichage d'icône sont codés par une série de bits comportant une première partie définissant un code prédéterminé d'identification du type de mot et une seconde partie définissant un paramètre de durée d'affichage icône ;
- les mots des premier et second types sont des nombres exprimés dans une numérotation hexadécimale ;
- les mots des premier et second types sont codés sur 16 bits ;
- dans les mots du premier type, le code prédéterminé d'identification du type de mot est codé par les quatre premiers bits et le paramètre de durée d'affichage d'icône est codé par les douze derniers bits ;
- le réseau télécommunication est du type sans fil, notamment du type GSM (Global System for Mobile Communications).

L'invention a également pour objet un terminal mobile **caractérisé en ce qu**'il comprend des moyens pour exécuter le procédé tel que défini ci-dessus.

L'invention a encore pour objet une structure de données destinée à gérer l'animation d'icônes définies dans un message transmis par un réseau télécommunication entre un terminal émetteur et un terminal récepteur, **caractérisée en ce qu**'elle comporte des données définissant les icônes et une séquence de mots destinés à gérer l'animation de ces icônes, comprenant un premier type de mot définissant une durée d'affichage d'icône et un second type de mot définissant un renvoi vers une icône sélectionnée définie dans la structure de données, la durée d'affichage d'une icône sélectionnée étant imposée par le dernier mot du premier type qui précède le mot du second type renvoyant vers l'icône sélectionnée.

Suivant d'autres caractéristiques de cette structure :
- les icônes de l'animation sont définies les unes à la suite des autres dans la structure de données ;
- l'icône définie en premier dans la structure de données est directement précédée de la séquence de gestion de l'animation ;
- la structure comprend un mot définissant la taille de la séquence de gestion de l'animation précédant directement cette séquence ;
- le premier mot de la séquence de gestion de l'animation est du premier type ;
- les mots et les icônes sont définis par des octets, les mots du second type définissant un saut d'octets ;
- les mots du premier type définissant une durée d'affichage d'icône sont codés par une série de bits comportant une première partie définissant un code prédéterminé d'identification du type de mot et une seconde partie définissant un paramètre de durée d'affichage icône ;
- les mots des premier et second types sont des nombres exprimés dans une numérotation hexadécimale ;
- les mots des premier et second types sont codés sur 16 bits ;
- dans les mots du premier type, le code prédéterminé d'identification du type de mot est défini par les quatre premiers bits et le paramètre de durée d'affichage d'icône est défini par les douze derniers bits.

L'invention sera mieux comprise à la lecture de la description qui va suivre, donnée uniquement à titre d'exemple et faite en se référant aux dessins dans lesquels :
- la figure 1 est une vue schématique d'un terminal mobile selon l'invention ;
- la figure 2 est un diagramme séquentiel illustrant le procédé selon l'invention.

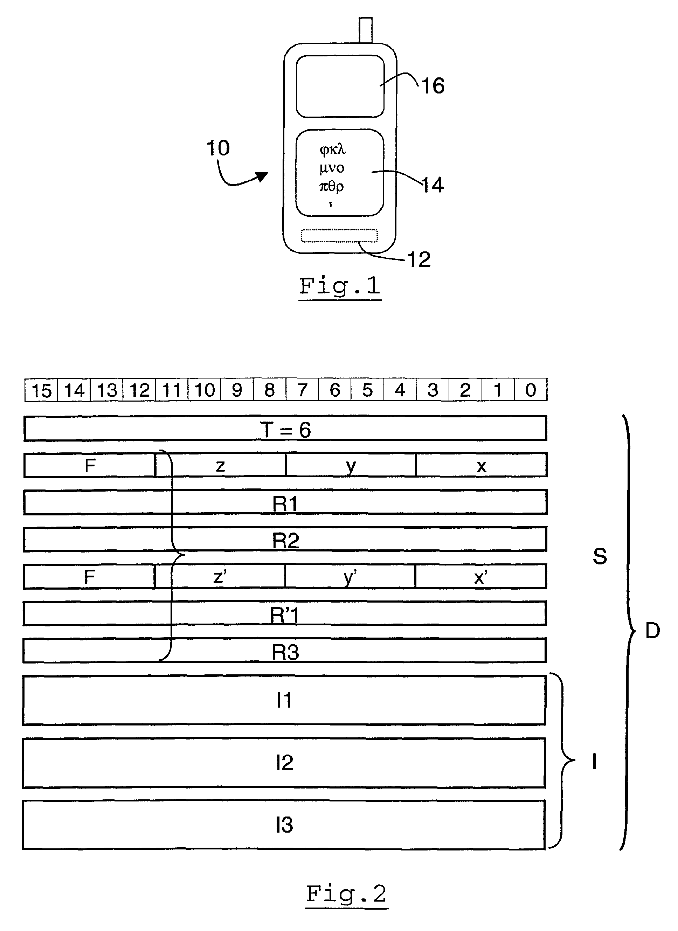

On a représenté sur la figure 1 un terminal mobile, désigné par la référence générale 10, comprenant des moyens 12 pour exécuter un procédé de gestion d'une animation d'icônes, tel que décrit ci-dessous. Le terminal 10 est, selon le cas, un émetteur ou un récepteur.

Le terminal 12 comporte notamment des moyens 14 de saisie de données et des moyens 16 d'affichage de données constitués, par exemple, par un écran à cristaux liquides.

Les icônes sont définies dans un message destiné à être transmis par un réseau de télécommunication entre un terminal émetteur et un terminal récepteur constitué chacun, par exemple, par un terminal 10 tel que celui représenté sur la figure 1.

Le réseau de télécommunication est plus particulièrement du type sans fil, par exemple du type conforme à la norme GSM (Global System for Mobile Communications).

Les icônes de l'animation sont définies de façon groupée dans le message, les unes à la suite des autres, comme cela est prévu par exemple dans un message de type EMS (Enhanced Messaging Service).

Dans l'exemple illustré sur la figure 2, il est prévu un groupe I de trois icônes successives I1 à 13. Ces icônes I1 à 13 sont définies dans un format adapté pour être affiché sur l'écran d'un terminal tel que celui représenté sur la figure 1, par exemple un écran à cristaux liquides.

Conformément au procédé de l'invention, on construit une structure D de données dans laquelle on associe aux données définissant les icônes une séquence S de mots destinés à gérer l'animation de ces icônes.

Les icônes I1 à 13 de l'animation sont définies les unes à la suite des autres dans la structure D de données. L'icône définie en premier dans la structure D de données, à savoir l'icône I1 dans l'exemple de la figure 2, est directement précédée de la séquence S de gestion de l'animation.

La séquence S est directement précédée d'un mot définissant la taille de cette séquence S. Ainsi, dans l'exemple illustré sur la figure 2, la taille T de la séquence S est de 6 mots.

Le mot indiquant la taille T de la séquence S ainsi que les mots de cette séquence S sont, par exemple, codés sur 16 bits et exprimés dans une numérotation hexadécimale.

La séquence S comprend un premier type de mot définissant une durée d'affichage d'icône. Ces mots du premier type sont codés par une série de bits comportant une première partie définissant un code prédéterminé d'identification du type de mot est une seconde partie définissant un paramètre de durée d'affichage d'icône.

Dans l'exemple illustré sur la figure 2, le code prédéterminé d'identification du type de mot est défini par les quatre premiers bits et le paramètre de durée d'affichage d'icône est défini par les douze derniers bits. Plus particulièrement, le code prédéterminé d'identification est F en numérotation hexadécimale. Ainsi, dans le cas de l'exemple, un mot du premier type s'écrit en numérotation hexadécimale : Fzyx.

En fixant à 100 ms l'unité du paramètre de durée d'affichage d'icône défini sur 12 bits, cette durée d'affichage peut être réglée entre :
0 et 2¹² x 100 ms = 6' 49" 500 ms.

On notera que le premier mot de la séquence S de gestion de l'animation est du premier type.

La séquence S comprend également un second type de mot définissant un renvoi vers une icône sélectionnée définie dans la structure D de données. Dans l'exemple décrit, les mots et les icônes étant définis par des octets, les mots du second type définissent un saut d'octets. Ce saut est réalisé éventuellement par rapport à un mot de référence. Par ailleurs, un mot du second type a une valeur, en numérotation hexadécimale, inférieure à F000 de façon à être distingué d'un mot du premier type.

Dans l'exemple illustré sur la figure 2, le premier mot de la séquence S, du premier type, définit une durée d'affichage Fzyx.

Le deuxième mot de la séquence S est du second type et définit un renvoi R1 vers la première I1 des icônes définies après la séquence S. Ce renvoi R1 provoque l'affichage de l'icône sélectionnée I1 sur les moyens 16 du terminal 10, pendant la durée d'affichage Fzyx.

Le troisième mot de la séquence S est également du second type et définit un renvoi R2 vers la deuxième 12 des icônes définies après la séquence S. Ce renvoi R2 provoque l'affichage de l'icône sélectionnée 12 pendant la durée d'affichage Fzyx.

Le quatrième mot de la séquence S, du premier type, définit une durée d'affichage différente de la précédente égale à Fz'y'x'.

Les cinquième et sixième mots de la séquence S, du second type, définissent des renvois R' 1 et R3 respectivement vers les première I1 et troisième I3 icônes définies après la séquence S. Ces renvois R'1 et R3 provoquent respectivement l'affichage des icônes sélectionnées I1 et 13 pendant la durée d'affichage Fz'y'x'.

On notera que le second renvoi R'1 vers la première icône I1 peut correspondre à un saut identique au premier renvoi R1 vers cette première icône I1 ou différent de ce premier renvoi. Dans l'exemple illustré, les renvois sont tous exprimés par un saut compté à partir du mot indiquant la taille T de la séquence. De ce fait, R1 et R'1 sont identiques.

Conformément à un premier mode de réalisation de l'invention, la séquence S est définie dans un support de données du terminal récepteur. On construit alors la structure de données dans le terminal récepteur en recueillant les icônes contenues dans le message par exemple dans une mémoire tampon du terminal récepteur.

Dans ce premier cas, le message dans lequel sont définies les icônes peut être de type EMS (Enhanced Messaging Service).

Conformément à un second mode de réalisation de l'invention, on construit la structure de données dans le message contenant les icônes destiné être transmis entre le terminal émetteur et le terminal récepteur.

Dans ce second cas, le message destiné à être transmis entre le terminal émetteur et le terminal récepteur peut être de type SMS (Short Message Service).

Après avoir construit la structure de données, on exécute la séquence S dans le terminal récepteur de façon que la durée d'affichage d'une icône sélectionnée est imposée par le dernier mot du premier type qui précède le mot du second type renvoyant vers l'icône sélectionnée.

Parmi les avantages de l'invention, on notera que celle-ci permet de réutiliser plusieurs fois une même icône dans une animation alors que celle-ci est définie une seule fois dans le message, ceci grâce aux renvois définit dans la séquence S.

Le procédé de gestion de l'animation des icônes conformément à l'invention permet en particulier de gérer une animation d'icônes dans un message se présentant sous la forme d'un fichier téléchargeable dans un terminal récepteur.

Le procédé selon l'invention permet de gérer l'animation d'un nombre variable d'icônes définies dans un message, ce nombre pouvant être inférieur ou supérieur à celui de l'exemple illustré sur la figure 2, par exemple égal à 4 comme dans un message de type EMS (Enhanced Messaging Service).

## Revendications

1. Procédé de gestion d'une animation d'icônes (I1 à 13) définies dans un message destiné à être transmis par un réseau de télécommunication entre un terminal émetteur et un terminal récepteur,
**caractérisé en ce que**
- on construit une structure (D) de données dans laquelle on associe aux icônes une séquence (S) de mots destinés à gérer l'animation de ces icônes comprenant un premier type de mot (Fzyx, Fz'y'x') définissant une durée d'affichage d'icône et un second type de mot (R1, R2, R'1, R3) définissant un renvoi vers une icône sélectionnée définie dans la structure (D) de données,
- on exécute la séquence (S) de façon que la durée d'affichage d'une icône sélectionnée est imposée par le dernier mot du premier type qui précède le mot du second type renvoyant vers l'icône sélectionnée.

2. Procédé selon la revendication 1, **caractérisé en ce que** la séquence (S) est définie dans un support de données du terminal récepteur et **en ce que** l'on construit la structure (D) de données dans le terminal récepteur.

3. Procédé selon la revendication 2, **caractérisé en ce que** le message dans lequel sont définies les icônes est de type EMS (Enhanced Messaging Service).

4. Procédé selon la revendication 1, **caractérisé en ce que** l'on construit la structure (D) de données dans le message destiné être transmis entre le terminal émetteur et le terminal récepteur.

5. Procédé selon la revendication 4, **caractérisé en ce que** le message destiné à être transmis entre le terminal émetteur et le terminal récepteur est de type SMS (Short Message Service).

6. Procédé selon l'une quelconque des revendications 1 à 5, **caractérisé en ce que** les icônes (I1 à I3) de l'animation sont définies les unes à la suite des autres dans la structure (D) de données.

7. Procédé selon l'une quelconque des revendications 1 à 6, **caractérisé en ce que** l'icône (I1) définie en premier dans la structure (D) de données est directement précédée de la séquence (S) de gestion de l'animation.

8. Procédé selon l'une quelconque des revendications 1 à 7, **caractérisé en ce que**, dans la structure (D) de données, la séquence (S) est directement précédée d'un mot (T) définissant la taille de la séquence (S) de gestion de l'animation.

9. Procédé selon l'une quelconque des revendications 1 à 8, **caractérisé en ce que** le premier mot de la séquence (S) de gestion de l'animation est du premier type.

10. Procédé selon l'une quelconque des revendications 1 à 9, **caractérisé en ce que** les mots et les icônes (I1 à I3) sont définis par des octets, les mots du second type définissant un saut d'octets.

11. Procédé selon l'une quelconque des revendications 1 à 10, **caractérisé en ce que** les mots du premier type définissant une durée d'affichage d'icône sont codés par une série de bits comportant une première partie définissant un code prédéterminé d'identification du type de mot et une seconde partie définissant un paramètre de durée d'affichage icône.

12. Procédé selon l'une quelconque des revendications 1 à 11, **caractérisé en ce que** les mots des premier et second types sont des nombres exprimés dans une numérotation hexadécimale.

13. Procédé selon la revendication 12, **caractérisé en ce que** les mots des premier et second types sont codés sur 16 bits.

14. Procédé selon les revendications 11 et 13 prises ensemble, **caractérisé en ce que**, dans les mots du premier type, le code prédéterminé d'identification du type de mot est codé par les quatre premiers bits et le paramètre de durée d'affichage d'icône est codé par les douze derniers bits.

15. Procédé selon l'une quelconque des revendications 1 à 14, **caractérisé en ce que** le réseau télécommunication est du type sans fil, notamment du type GSM (Global System for Mobile Communications).

16. Terminal mobile (10) **caractérisé en ce qu**'il comprend des moyens (12) pour exécuter le procédé selon l'une quelconque des revendications précédentes.

17. Structure (D) de données destinée à gérer l'animation d'icônes (I1 à 13) définies dans un message transmis par un réseau télécommunication entre un terminal émetteur et un terminal récepteur, **caractérisée en ce qu**'elle comporte des données définissant les icônes et une séquence (S) de mots destinés à gérer l'animation de ces icônes, comprenant un premier type de mot (Fzyx, Fz'y'x') définissant une durée d'affichage d'icône et un second type de mot (R1, R2, R'1, R3) définissant un renvoi vers une icône sélectionnée définie dans la structure (D) de données, la durée d'affichage d'une icône sélectionnée étant imposée par le dernier mot du premier type qui précède le mot du second type renvoyant vers l'icône sélectionnée.

18. Structure (D) de données selon la revendication 17, **caractérisée en ce que** les icônes (I1 à I3) de l'animation sont définies les unes à la suite des autres dans la structure (D) de données.

19. Structure (D) de données selon la revendication 18, **caractérisée en ce que** l'icône (I1) définie en premier dans la structure (D) de données est directement précédée de la séquence (S) de gestion de l'animation.

20. Structure (D) de données selon l'une quelconque des revendications 17 à 19, **caractérisée en ce qu'**elle comprend un mot (T) définissant la taille de la séquence (S) de gestion de l'animation précédant directement cette séquence (S).

21. Structure (D) de données selon l'une quelconque des revendications 17 à 20, **caractérisée en ce que** le premier mot de la séquence (S) de gestion de l'animation est du premier type.

22. Structure (D) de données selon l'une quelconque des revendications 17 à 21, **caractérisée en ce que** les mots et les icônes (I1 à I3) sont définis par des octets, les mots du second type définissant un saut d'octets.

23. Structure (D) de données selon l'une quelconque des revendications 17 à 22, **caractérisée en ce que** les mots du premier type définissant une durée d'affichage d'icône sont codés par une série de bits comportant une première partie définissant un code prédéterminé d'identification du type de mot et une seconde partie définissant un paramètre de durée d'affichage icône.

24. Structure (D) de données selon l'une quelconque des revendications 17 à 23, **caractérisée en ce que** les mots des premier et second types sont des nombres exprimés dans une numérotation hexadécimale.

25. Structure (D) de données selon la revendication 24, **caractérisée en ce que** les mots des premier et second types sont codés sur 16 bits.

26. Structure (D) de données selon les revendications 23 et 25 prises ensemble, **caractérisée en ce que**, dans les mots du premier type, le code prédéterminé d'identification du type de mot est défini par les quatre premiers bits et le paramètre de durée d'affichage d'icône est défini par les douze derniers bits.
